Europäisches Patentamt

European Patent Office

Office européen des brevets

(11) Publication number : **0 490 696 A1**

## (12) EUROPEAN PATENT APPLICATION

(21) Application number : 91311604.2

(22) Date of filing : 12.12.91

(51) Int. Cl.$^5$ : **B01J 23/62,** C10G 35/09, C10G 59/02

(30) Priority : **14.12.90 US 627527**

(43) Date of publication of application :
**17.06.92 Bulletin 92/25**

(84) Designated Contracting States :
**BE DE FR GB IT NL**

(71) Applicant : **EXXON RESEARCH AND
ENGINEERING COMPANY**
P.O.Box 390, 180 Park Avenue
Florham Park, New Jersey 07932 (US)

(72) Inventor : **Baird Jr., William Chalmers**
5905 Bennington Avenue
Baton Rouge, Louisiana 70808 (US)
Inventor : **Boyle, Joseph Philip**
906 Lakeshore Road
Sarnia, Ontario, N7V 2V2 (CA)
Inventor : **Swan III, George Alexander**
18437 Wildlife Way Drive
Baton Rouge, Louisiana 70817 (US)

(74) Representative : **Somers, Harold Arnold et al**
ESSO Engineering (Europe) Ltd. Patents &
Licences Mailpoint 72 Esso House Ermyn Way
Leatherhead, Surrey KT22 8XE (GB)

(54) Multiple zone reforming process with tin-platinum-iridium catalysts.

(57) A process for reforming a naphtha feed at low severities with tin-modified platinum-iridium catalyst is described. Such catalysts manifest both high selectivity and high activity in reforming a naphtha feed at low severities in the lead reactor, or reactors, of a series of reactors (i.e., within the dehydrogenation and ring isomerization zone, or zones, of a reforming unit). The lead reactors of the series are charged with a tin-containing platinum-iridium catalyst, and the naphtha feed reformed to produce a low RON clear $C_5+$ liquid reformate. The low octane product of the lead reactors may be transferred to a mogas pool, into blending components, or all or some part of the product further reformed. Preferably, the product is further reformed in a tail reactor, and preferably the tail reactor is charged with a non-tin containing platinum, or platinum-iridium catalyst.

EP 0 490 696 A1

FIELD OF THE INVENTION

This invention relates to a process for reforming with high activity tin modified platinum-iridium catalysts. In particular, it relates to a low severity reforming process wherein these catalysts are employed in the lead reactor, or reactors, of a series for the production from naphtha of gasoline of relatively low octane.

BACKGROUND OF THE INVENTION

Catalytic reforming, or hydroforming, is a well-established industrial process employed by the petroleum industry for improving the octane quality of naphthas or straight run gasolines. In reforming, a multi-functional catalyst is employed which contains a metal hydrogenation/dehydrogenation (hydrogen transfer) component, or components, composited with a porous, inorganic oxide support, notably alumina. Platinum metal catalysts, or a catalyst which contains platinum to which one or more additional metal promoters have been added to form poly-metallic catalysts, are conventionally employed in conducting reforming operations. In a reforming operation, one or a series of reactors constitute the reforming unit which provides a series of reaction zones. Typically, a series of reactors are employed, e.g., three or four reactors, these constituting the heart of the reforming unit. Each reforming reactor is generally provided with a fixed bed, or beds, of the catalyst, each receives down-flow feed, and each is provided with a preheater or interstage heater, because the reactions which take place are endothermic. A naphtha feed, with hydrogen, is concurrently passed through a preheat furnace and reactor, and then in sequence through subsequent interstage heaters and reactors of the series. The product from the last reactor is separated into a $C_5+$ liquid fraction which is recovered, and a vaporous effluent. The vaporous effluent is a gas rich in hydrogen, and usually contains small amounts of normally gaseous hydrocarbons, from which hydrogen is separated and recycled to the process.

Reforming is defined as the total effect of the molecular changes, or hydrocarbon reactions, produced by dehydrogenation of cyclohexanes and dehydroisomerization of alkylcyclopentanes to yield aromatics; dehydrogenation of paraffins to yield olefins; dehydrocyclization of paraffins and olefins to yield aromatics; isomerization of n-paraffins; isomerization of alkylcycloparaffins to yield cyclohexanes; isomerization of substituted aromatics; and hydrocracking of paraffins which produces gas, and inevitably coke, the latter being deposited on the catalyst. The recycled hydrogen suppresses, but cannot prevent the build up of coke.

The sum-total of the reforming reactions in most commercial operations occurs as a continuum between the first and last reaction zone of the series, i.e., as the feed enters and passes over the first fixed catalyst bed of the first reactor and exits from the last fixed catalyst bed of the last reactor of the series. During an on-oil run, the activity of the catalyst gradually declines due to the build-up of coke on the catalyst, and hence during operation, the temperature of the process is gradually raised to compensate for the activity loss caused by the coke deposition. Eventually, however, economics dictate the necessity of reactivating the catalyst. Consequently, in all processing of this type the catalyst must necessarily be periodically regenerated by burning off the coke in the presence of an oxygen-containing gas at controlled conditions. Catalyst reactivation is then completed in a sequence of steps wherein the metal hydrogenation/dehydrogenation components are atomically redispersed.

In the reforming operation, the reactions which predominate between the several reactors differ dependent principally upon the nature of the feed, and the temperature employed within the individual reactors. In the initial reaction zone, or first reactor, which is maintained at a relatively low temperature, it is believed that the primary reaction involves the dehydrogenation of naphthenes to produce aromatics. The isomerization of naphthenes, notably $C_5$ and $C_6$ naphthenes, also occurs to a considerable extent. Most of the other reforming reactions also occur, but only to a lesser, or smaller extent. There is relatively little hydrocracking, and very little olefin or paraffin dehydrocyclization occurs in the first reactor. Within the intermediate reactor zone(s), or reactor(s), the temperature is maintained somewhat higher than in the first, or first reactor of the series, and it is believed that the principal reaction involves the isomerization of naphthenes, normal paraffins and isoparaffins. Some dehydrogenation of naphthenes may, and usually does occur, at least within the first of the intermediate reactors. There is usually some hydrocracking, at least more than in the first reactor of the series, and there is more olefin and paraffin dehydrocyclization. The third reactor of the series, or second intermediate reactor, is generally operated at a somewhat higher temperature than the second reactor of the series. It is believed that the naphthene and paraffin isomerization reactions continue as the primary reaction in this reactor, but there is very little naphthene dehydrogenation. There is a further increase in paraffin dehydrocyclization, and more hydrocracking. In the final reaction zone, or final reactor, which is operated at the highest temperature of the series, it is believed that paraffin dehydrocyclization, particularly the dehydrocyclization of the short chain, notably $C_6$ and $C_7$ paraffins, is the primary reaction. The isomerization reactions continue, and there is more hydrocracking in this reactor than in any one of the other reactors of the series. Unfortunately, dealkylation and hydrocracking reactions occur to some extent throughout all of the reactors of a unit.

In contemporary reforming operations there is a persistent demand for high octane reformate. Despite this however there is also a persistent demand, and need for relatively low octane gasoline for direct fuel use, or as a raw material from which aromatics can be extracted, and there are many locations throughout the world where low severity reforming is conducted to supply these needs.

THE INVENTION

In accordance with the present invention, there is provided a process for improving the octane quality of a naphtha comprising a mixture of paraffins, aromatics and naphthenes by reforming said naphtha feed over a tin modified platinum-iridium catalyst, particularly a tin modified platinum-iridium catalyst as defined hereafter, at reforming conditions sufficient to produce predominantly dehydrogenation and ring isomerization reactions, with minimum dehydrocyclization, and produce a reformate of RON clear octane ranging from about 80 to about 95, preferably about 85 to about 90, and provide reformate yield credits without significant loss, if any, of catalyst activity.

In its more preferred aspects, the reaction is conducted in a multi-reactor reforming unit constituted of a plurality of serially connected reactors inclusive of one or more lead reactors and tail reactor, the lead reactors of which are provided with a catalyst composition comprised of a platinum-iridium catalyst modified with tin in amount, when reformed at reforming conditions at severity to produce hydrogen and reformate of about 80 RON clear to about 95 RON clear, preferably about 85 RON clear to about 90 RON clear, sufficient to suppress dealkylation in the lead reactors, and the tail reactor with a non-tin modified platinum catalyst, preferably a non-tin modified platinum-iridium catalyst, within which the product of the lead reactors is reformed at reforming conditions sufficient to increase hydrocyclization, and overall to increase the $C_5+$ liquid naphtha yield vis-a-vis a process operated at similar conditions with catalysts otherwise similar except that the catalyst in the lead reactors do not contain any tin.

The catalyst used in the lead reactors is comprised generally of from about 0.1 percent to about 0.7 percent platinum, preferably from about 0.1 to about 0.5 percent platinum, from about 0.1 percent to about 0.7 percent iridium, preferably from about 0.1 to about 0.5 percent iridium, and from about 0.02 percent to about 0.4 percent tin, preferably from about 0.05 to about 0.3 percent tin, based on the total weight of the catalyst (dry basis), uniformly dispersed throughout a particulate solid support. Suitably, the weight ratio of the (platinum + iridium):tin will range from about 2:1 to about 15:1, preferably from about 4:1 to about 12:1, based on the total weight of platinum, iridium and tin in the catalyst composition. Suitably, the catalyst also contains halogen, preferably chlorine, in concentration ranging from about 0.1 percent to about 3 percent, preferably from about 0.8 to about 1.5 percent, based on the total weight of the catalyst. Preferably also, the catalyst is sulfided, e.g., by contact with a hydrogen sulfide-containing gas, and contains from about 0.01 percent to about 0.2 percent, more preferably from about 0.05 percent to about 0.15 percent sulfur, based on the total weight of the catalyst. The metal components, in the amounts stated, are uniformly dispersed throughout an inorganic oxide support, preferably an alumina support and more preferably a gamma alumina support.

The preferred platinum-iridium catalyst employed in the tail reactor is essentially the same as that employed in the lead reactors except that the catalyst composite does not contain any tin.

A process of this type, as has been suggested, results in the suppression of excessive dealkylation reactions in the lead reactors, this permitting a simultaneous increase in dehydrocyclization reactions in the tail reactor to increase overall the $C_5+$ liquid yields. In addition to increased $C_5+$ liquid yields, the activity of the catalyst employed in the lead reactors is only moderately less than that of catalysts otherwise similar except that they are not modified with tin. Such catalysts are useful in the lead reactors of a unit in which the low octane reformate is either (1) directly processed in a tail reactor at dehydrocyclization conditions, (2) is dearomatized using physical separation, and the dearomatized product then reformed to a higher octane, or (3) all or some portion of the low octane reformate is transferred to a mogas blending pool.

The process of this invention requires the use in the lead reactor, or reactors, of the platinum-iridium catalyst, modified or promoted with the relatively small and infinitesimal amount of tin; or, that portion of the reforming zone wherein the primary, or predominant reaction involves the dehydrogenation of naphthenes to produce aromatics, and the isomerization of naphthenes. This zone, termed the dehydrogenation and ring isomerization zone, or zones, is invariably found in advance of the last reaction zone, i.e., the dehydrocyclization zone, of the series. Of course, where there is only a single reactor, quite obviously the dehydrogenation and ring isomerization reactions will predominate in the catalyst bed, or beds defining the zone, or zones, located at the feed entry side of the reactor upstream of the dehydrocyclization zone. Where reforming is carried out to its full extent and there are multiple reactors, quite obviously the dehydrogenation and ring isomerization reactions will predominate in the catalyst bed, or beds defining a zone(s) located in front of the last reactor of the series. The paraffin dehydrocyclization reaction, in such case, is predominant of the sum-total of the reactions which occur within the catalyst bed, or beds constituting the last reactor of the series dependent upon the temperature and amount of catalyst that is employed in the final reactor vis-a-vis the total catalyst contained in the several reactors, and temperatures maintained in the other reactors of the reforming unit.

In one of its preferred aspects, a non-tin containing promoted platinum catalyst, particularly a non-tin modified platinum-iridium catalyst is employed in the paraffin dehydrocyclization zone. Suitably, where a platinum-iridium catalyst is employed, the weight ratio iridium-platinum will range from about 0.1:1 to about 1:1, preferably from about 0.5:1 to about 1:1, with the absolute concentration of the platinum ranging from about 0.1 percent to about 0.7 percent, preferably from about 0.1 percent to about 0.5 percent, based on the total weight of the catalyst composition. A quite suitable catalyst of this type can also contain iridium in these concentrations, viz. in concentrations ranging from about 0.1 percent to about 0.7 percent, preferably from about 0.1 percent to about 0.5 percent, based on the total weight of the catalyst composition. The catalyst employed in the lead reaction zones, as required in the practice of this invention, is necessarily constituted of composite particles which contain, besides a support material, the hydrogenation/dehydrogenation components, a halide component, and preferably, the catalyst is sulfided. The support material is constituted of a porous, refractory inorganic oxide, particularly alumina. The support can contain, e.g., one or more alumina, bentonite, clay, diatomaceous earth, zeolite, silica, activated carbon, magnesia, zirconia, thoria, and the like; though the most preferred support is alumina to which, if desired, can be added a suitable amount of other refractory carrier materials such as silica, zirconia, magnesia, titania, etc., usually in a range of about 1 to 20 percent, based on the weight of the support. A preferred support for the practice of the present invention is one having a surface area of more than 50 m²/g, preferably from about 100 to about 300 m²/g, a bulk density of about 0.3 to 1.0 g/ml, preferably about 0.4 to 0.8 g/ml, an average pore volume of about 0. 2 to 1.1 ml/g, preferably about 0.3 to 0.8 ml/g, and an average pore diameter of about 30 to 300 Angstrom units.

The metal hydrogenation-dehydrogenation components can be uniformly dispersed throughout the porous inorganic oxide support by various techniques known to the art such as ion-exchange, coprecipitation with the alumina in the sol or gel form, and the like. For example, the catalyst composite can be formed by adding together suitable reagents such as a salt of tin, and ammonium hydroxide or carbonate, and a salt of aluminum such as aluminum chloride or aluminum sulfate to form aluminum hydroxide. The aluminum hydroxide containing the tin salt can then be heated, dried, formed into pellets or extruded, and then calcined in air or nitrogen up to 540°C. The other metal components can then be added. Suitably, the metal components can be added to the catalyst by impregnation, typically via an "incipient wetness" technique which requires a minimum of solution so that the total solution is absorbed, initially or after some evaporation.

It is preferred, in forming the tin modified lead reactor catalyst to deposit the tin first, and the additional metals are then added to a previously pilled, pelleted, beaded, extruded, or sieved tin-containing particulate support material by the impregnation method. Pursuant to the impregnation method, porous refractory inorganic oxides in dry or solvated state are contacted, either alone or admixed, or otherwise incorporated with a metal or metals-containing solution, or solutions, and thereby impregnated by either the "incipient wetness" technique, or a technique embodying absorption from a dilute or concentrated solution, or solutions, with subsequent filtration or evaporation to effect total uptake of the metallic components which are uniformly dispersed throughout the particulate solids support.

In the step of forming the tin-containing support, a tin salt, e.g., stannous chloride, stannic chloride, stannic tartrate, stannic nitrate, or the like, can be uniformly dispersed throughout a solid support or carrier by the method described in U.S. patent 4,963,249 which was issued on October 16, 1990 to William C. Baird, Jr. et al, specific reference being made to Column 6, lines 15-23, and to Column 58 through Column 69, inclusively, herewith incorporated and made of reference. In forming the lead reactor catalysts, the step of incorporating tin into the support is omitted, while other metallic components are added to the support by impregnation.

Platinum in absolute amount is usually supported on the carrier within the range of from about 0.1 to about 0.7 percent, preferably from about 0.1 to about 0.5 percent, based on the weight of the catalyst (dry basis). Iridium, in absolute amount, is also usually supported on the carrier in concentration ranging from about 0.1 to about 0.7 percent, preferably from about 0.1 to about 0.5 percent, based on the weight of the catalyst (dry basis). The tin, where added to the support to form the lead reactor catalyst, preferably before addition of the platinum and iridium, is added to the support in concentration ranging from about 0.02 percent to about 0.4 percent, preferably from about 0.05 to about 0.3 percent, based on the total weight of the catalyst (dry basis). The weight ratio of the (platinum + iridium):tin suitably ranges from about 2:1 to about 15:1, preferably from about 4:1 to about 12:1, based on the total weight of the platinum, iridium, and tin in the catalyst composition.

To enhance catalyst performance in reforming operations, it is also required to add a halogen component to the catalysts, fluorine and chlorine being preferred halogen components. The halogen is contained on the catalyst within the range of 0.1 to 3 percent, preferably within the range of about 0.8 to about 1.5 percent, based on the weight of the catalyst. When using chlorine as halogen component, it is added to the catalyst within the range of about 0.2 to 2 percent, preferably within the range of about 1 to 1.5 percent, based on the weight of the catalyst. The introduction of halogen into the catalyst can be carried out by any method at any time. It can be added to the catalyst during catalyst preparation, for example, prior to, following or simultaneously with the incorporation of a metal hydrogenation/dehydrogenation component, or components. It can also be introduced by contacting a carrier material in a vapor phase or liquid phase with a halogen compound such as hydrogen fluoride, hydrogen chloride, ammonium chloride, or the like.

The catalyst is dried by heating at a temperature above about 25°C, preferably between about 65°C and 150°C, in the presence of nitrogen or oxygen, or both, in an air stream or under vacuum. The catalyst is calcined at a temperature between about 200°C and 455°C, either in the presence of oxygen in an air stream or in the presence of an inert gas such as nitrogen.

Sulfur is a highly preferred component of the catalysts, the sulfur content of the catalyst generally ranging to about 0.2 percent, preferably from about 0.05 percent to about 0.15 percent, based on the weight of the catalyst (dry basis). The sulfur can be added to the catalyst by conventional methods, suitably by breakthrough sulfiding of a bed of the catalyst with a sulfur-containing gaseous stream, e.g., hydrogen sulfide in hydrogen, performed at temperatures ranging from about 175°C to about 565°C, and at pressures ranging from about 1 to about 40 atmospheres for the time necessary to achieve breakthrough, or the desired sulfur level.

The feed or charge stock can be a virgin naphtha, cracked naphtha, a naphtha from a coal liquefaction process, a Fischer-Tropsch naphtha, or the like. Typical feeds are those hydrocarbons containing from about 5 to about 12 carbon atoms, or more preferably from about 6 to about 9 carbon atoms. Naphthas, or petroleum fractions boiling within the range of from about 25°C to about 235°C, and preferably from about 50°C to about 190°C, contain hydrocarbons of carbon numbers within these ranges. Typical fractions thus usually contain from about 15 to about 80 vol.% paraffins, both normal and branched, which fall in the range of about $C_5$ to $C_{12}$, from about 10 to 80 vol.% of naphthenes falling within the range of from about $C_6$ to $C_{12}$, and from 5 through 20 vol.% of the desirable aromatics falling within the range of from about $C_6$ to $C_{12}$.

The reforming runs are initiated by adjusting the hydrogen and feed rates, and the temperature (Equivalent Isothermal Temperature) and pressure to operating conditions. The run is continued at optimum reforming conditions by adjustment of the major process variables, within the ranges described below:

### LEAD REACTOR CONDITIONS

| Major Operating Variables | Typical Process Conditions | Preferred Process Conditions |
|---|---|---|
| Pressure, psig | 100-700 | 150-500 |
| Reactor Temp., °C | 370-540 | 425-510 |
| Recycle Gas Rate, SCF/B | 2,000-10,000 | 2,000-6,000 |
| Feed Rate, W/Hr/W | 1-20 | 5-15 |

### TAIL REACTOR CONDITIONS

| Major Operating Variables | Typical Process Conditions | Preferred Process Conditions |
|---|---|---|
| Pressure, psig | 100-700 | 150-500 |
| Reactor Temp., °C | 425-540 | 455-525 |
| Recycle Gas Rate, SCF/B | 2,000-10,000 | 2,000-6,000 |
| Feed Rate, W/Hr/W | 1-10 | 2-8 |

The major operating variables, in accordance with the practice of this invention are selected to provide a combination of values which will produce in the dehydrogenation and ring isomerization zone, or zones, which contain a tin modified platinum-iridium catalyst, an RON clear octane number ranging from about 80 to about 95, preferably from about 85 to about 90. In other words, a combination of values are selected which provides an RON clear octane number reformate product from the lead reactor, or reactors, of a series, containing a tin modified platinum-iridium catalyst, ranging from about 80 to about 95, preferably from about 85 to about 90. This low octane reformate, in a preferred operation, is then processed in the dehydrocyclization zone, or tail reactor of the series, over a non-tin-containing platinum, or preferably a non-tin-containing platinum-iridium catalyst at generally higher severity conditions. Pursuant to operations at these conditions, the lead reactor, or reactors will produce at the low severity conditions greater yields of $C_5+$ reformate, generally up to about 2 vol. percent, or greater, than processes otherwise similar except that they do not contain a tin modified platinum-iridium catalyst; and this selectivity advantage will remain, or persist, even after the reformate is processed at higher severities in the tail reactor over a non-tin-containing platinum, or platinum-iridium catalyst. The activity of the catalyst employed in the lead reactor, or reactors, of the series, despite the higher selectivity, is only slightly less than that of a catalyst otherwise similar except that it does not contain tin.

The selection of the combination of major operating variables required to produce a target octane is per se well within the skill of the art. For example, a selection made between temperature and space velocity can be used to produce an RON clear octane product in the lead reactor, or reactors, ranging between 80 and 95, or preferably 85 to 90, as desired. Total pressure, and the hydrogen:oil ratio, or combinations of these major operating values with other operating values can also be employed to produce a target octane number for a reformate product of a lead reactor, or reactors.

The inventive process will be more fully understood by reference to the following examples, illustrating its more salient features. In the examples which follow all parts are given in terms of weight units, pressures in terms of pounds per square inch gauge, and temperatures in Fahrenheit degrees except as otherwise expressed.

EXAMPLES

Inspections on a full range Arab Light naphtha feed employed in making these tests are given below:

| Property | Arab Light Naphtha |
|---|---|
| Gravity at 15°C | |
| API° | 59.4 |
| Specific | 0.7412 |
| Octane, RON Clear | 38 |
| Molecular Weight | 111.3 |
| Sulfur, wppm | 0.3 |
| Distillation D-86, °C | |
| IBP | 90.0 |
| 5% | 102.5 |
| 10% | 105.0 |
| 50% | 125.0 |
| 90% | 154.0 |
| 95% | 160.0 |
| FBP | 171.0 |
| Composition, Wt.% | |
| Total Paraffins | 65.1 |
| Total Naphthenes | 19.3 |
| Total Aromatics | 15.6 |

In a series of runs, each of a number of selected catalysts were individually charged to a single reactor, the reactor filled to capacity with the catalyst, and runs made by passage of the naphtha over the catalysts at conditions simulating reforming at (1) essentially dehydrogenation conditions (R-1), and (2) essentially dehydrogenation and ring isomerization conditions (R-1 + R-2), respectively. The catalysts employed in making these runs were: Catalyst A (0.3 wt.% Pt/0.3 wt.% Ir); and Catalysts $B_1$ through $B_5$, each containing varying amounts of Pt, Ir and Sn, respectively. The metal components, in the production of all of Catalysts A and B were uniformly distributed throughout a particulate alumina support.

The catalysts, i.e., Catalysts A and B, respectively, were evaluated at the following conditions:

| | R-1 | (R-1 + R-2) |
|---|---|---|
| Space Velocity, W/Hr/W | 10 | 6.5 |
| $H_2$ (Once-Through) KSCF/B | 2 | 2 |
| Temperature, °C | 485 | 485 |
| Pressure, psig | 275 | 275 |
| RON, clear | 80 | 88.5 |

The following is a tabulation of the $C_5$+ liquid yield, given in Liquid-Volume %, for runs made with each of the catalysts at simulated R-1 and (R-1 + R-2) conditions, respectively.

## Table

### $C_5$+ Liquid Yield, LV%

| | R-1 | (R-1 + R-2) |
|---|---|---|
| Catalyst A | 83.9 | 80.2 |
| (0.3 wt.% Pt/0.3 wt.% Ir) | | |
| Catalyst $B_1$ | 84.1 | 82.3 |
| (0.3 wt.% Pt/0.3 wt.% Ir/ | | |
| 0.1 wt.% Sn) | | |
| Catalyst $B_2$ | - | 81.9 |
| (0.3 wt.% Pt/0.1 wt.% Ir/ | | |
| 0.1 wt.% Sn) | | |
| Catalyst $B_3$ | - | 80.8 |
| (0.3 wt.% Pt/0.1 wt.% Ir*/ | | |
| 0.1 wt.% Sn) | | |
| Catalyst $B_4$ | - | 82.2 |
| (0.1 wt.% Pt/0.1 wt.% Ir/ | | |
| 0.1 wt.% Sn) | | |
| Catalyst $B_5$ | - | 82.7 |
| (0.1 wt.% Pt/0.1 wt.% Ir*/ | | |
| 0.1 wt.% Sn) | | |
| *agglomerated iridium | | |

7

The family of runs with the platinum-iridium-tin catalysts show that reforming the naphtha at low severity RON clear octane numbers above 80, notably at between 85 and 90, reformate yield credits approximate 2 LV% without any loss of the high activity credits which are normal for platinum-iridium catalysts. Excessive dealkylation is suppressed in these reactions by the presence of the tin, and by the combination of the low platinum and iridium contents and the tin. The greatest difference in $C_5+$ liquid yields occurs at (R-1 + R-2) conditions as contrasted with runs made at R-1 conditions.

In comparing relative activity value vis-a-vis time-on-oil, between about 10 hrs. and 100 hrs., Catalyst $B_5$ is shown to have the highest activity, as well as the greatest $C_5+$ liquid selectivity, in low-severity reforming at (R-1 + R-2) conditions throughout the period of operations vis-a-vis any other catalyst.

It is apparent that various modifications and changes can be made without departing the spirit and scope of the invention.

## Claims

1. A process for improving the octane quality of a naphtha comprising a mixture of paraffins, aromatics and naphthenes, which comprises reforming said naphtha feed over a tin-modified platinum-iridium catalyst at reforming conditions sufficient to produce predominantly dehydrogenation and ring isomerization reactions, with minimum paraffin dehydrocyclization, and produce a reformate of RON clear octane ranging from about 80 to about 95, said catalyst comprising from about 0.1 percent to about 0.7 percent platinum, from about 0.1 percent to about 0.7 percent iridium, and from about 0.02 percent to about 0.4 percent tin, composited with and substantially uniformly dispersed throughout an inorganic oxide support.

2. The process of Claim 1 wherein the catalyst composite contains from about 0.1 percent to about 0.5 percent platinum, from about 0.1 percent to about 0.5 percent iridium, and from about 0.05 to about 0.3 percent tin.

3. The process of Claim 1 or Claim 2 wherein the catalyst composite contains from about 0.1 percent to abut 3 percent halogen, and from about 0.01 percent to about 0.2 percent sulfur.

4. The process of any one of claims 1 to 3 wherein the inorganixc oxide support component of the catalyst is alumina.

5. A process for improving the octane quality of a naphtha comprised of a mixture of paraffins, aromatics and naphthenes in a reforming unit comprised of a plurality of serially connected reactors inclusive of one or more lead reactors or zones and a tail reactor or zone, each of which contains a platinum catalyst, the naphtha flowing in sequence from one reactor of the series to another and contacting the catalyst in the presence of hydrogen, the lead reactor (or zone), or reactors (or zones), of the series are provided with a catalyst comprised of from about 0.1 percent to about 0.7 percent platinum, from about 0.1 percent to about 0.7 percent iridium, and from about 0.02 percent to about 0.4 percent tin, based on the total weight of the catalyst, and reforming said naphtha feed over said catalyst at reforming conditions in said one or more lead reactors or zones sufficient to produce predominantly dehydrogenation and ring isomerization reactions, with minimum paraffin dehydrocyclization, and produce a reformate of RON clear ranging from about 80 to about 95.

6. The process of Claim 5 wherein the catalyst in the lead reactor or zone, or reactors or zones, contains from about 0.1 percent to about 0.5 percent platinum, from about 0.1 percent to about 0.5 percent iridium, and from about 0.05 to about 0.3 percent tin.

7. The process of Claim 5 or Claim 6 wherein the catalyst in the tail reactor or zone contains from about 0.1 to about 0.7 (e.g., from 0.1 to 0.5) percent platinum, and from about 0.1 percent to about 0.7 (e.g., from 0.1 to 0.5) percent iridium.

8. The process of any one of Claims 5 to 7 wherein the catalyst contains from about 0.1 percent to about 3 percent halogen, and from about 0.01 percent to about 0.2 percent sulfur.

9. The process of any one of claims 5 to 8 wherein the reforming conditions employed in the lead reactor or zone, or reactors or zones, of the series are defined as follows:

| Gauge Pressure, (psig) MPa | (from about 150 to 500)<br>from 1.034 to 3.448 kPa |
| Reactor Temperature, °C | from about 425 to 510 |
| Gas Rate, (SCF/B) $m^3H_2/m^3$ feed | (from about 2,000 to 6,000)<br>from 356.2 to 1068.6 |
| Feed Rate, W/Hr/W | about 5 to 15. |

10. The process of any one of Claims 5 to 9 wherein the reforming conditions employed in the tail reactor or zone of the series are defined as follows:

| Gauge Pressure, (psig) MPa | (from about 100 to 700,<br>e.g. from 150 to 500)<br>from 0.69 to 4.82,<br>e.g. from 1.03 to 3.45 |
| Reactor Temperature, °C | from about 425 to 540,<br>e.g., from 455 to 525 |
| Gas Rate, (SCF/B) $m^3H_2/m^3$ feed | (from about 2,000 to<br>10,000, e.g. from<br>2000 to 6000)<br>from 356.2 to 1780.9,<br>e.g. from 356.2 to 1068.2 |
| Feed Rate, W/Hr/W | from about 1 to 10,<br>e.g. from 2 to 8. |

## European Patent Office

# EUROPEAN SEARCH REPORT

Application Number

EP 91 31 1604

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2 130 881 (CFR)<br>* page 1, line 25 - line 37; claims 1-4 *<br>* page 4; example II * | 1,2,4 | B01J23/62<br>C10G35/09<br>C10G59/02 |
| Y | * page 3, line 3 - line 12 *<br>--- | 3 | |
| X | DE-A-2 515 480 (PROCATALYSE)<br>* page 3, line 10 - page 4, line 24 *<br>* page 8; example 4 * | 1,2 | |
| Y | * page 2, line 1 - page 3, line 9; claims 1-4 *<br>--- | 5-10 | |
| Y | EP-A-0 273 578 (EXXON)<br>* page 4, line 6 - page 5, line 31 * | 3 | |
| A | * page 7; claims 1-10; examples 1-3 *<br>--- | 5-10 | |
| Y | EP-A-0 234 837 (AMOCO)<br>* abstract; claims 1-21 *<br>* page 5, line 1 - line 25 *<br><br>----- | 5-10 | |

TECHNICAL FIELDS SEARCHED (Int. Cl.5)

B01J
C10G

The present search report has been drawn up for all claims

| Place of search | Date of completion of the search | Examiner |
|---|---|---|
| THE HAGUE | 18 FEBRUARY 1992 | LO CONTE C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)